(19) **Europäisches Patentamt**
**European Patent Office**
**Office européen des brevets**

(11) **EP 2 623 776 B1**

(12) **EUROPEAN PATENT SPECIFICATION**

(45) Date of publication and mention
of the grant of the patent:
**21.06.2017 Bulletin 2017/25**

(51) Int Cl.:
***F03D 7/04*** *(2006.01)* ***F03D 17/00*** *(2016.01)*

(21) Application number: **13153693.0**

(22) Date of filing: **01.02.2013**

(54) **Wind turbine generator and operation method for the same**

Windturbinengenerator und Betriebsverfahren dafür

Génératrice d'éolienne et son procédé de fonctionnement

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.02.2012 JP 2012020742
22.01.2013 JP 2013009445**

(43) Date of publication of application:
**07.08.2013 Bulletin 2013/32**

(73) Proprietor: **MITSUBISHI HEAVY INDUSTRIES,
LTD.
Tokyo 108-8215 (JP)**

(72) Inventor: **Koyanagi, Takuya
Tokyo, 108-8215 (JP)**

(74) Representative: **Intès, Didier Gérard André et al
Cabinet Beau de Loménie
158 rue de l'Université
75340 Paris Cedex 07 (FR)**

(56) References cited:
**EP-A1- 2 230 637     WO-A1-2007/010322
GB-A- 2 476 316     US-A- 5 155 375**

EP 2 623 776 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**[Technical Field]**

The present disclosure relates to a wind turbine generator and an operation method of the wind turbine generator, and in particular to a wind turbine generator which is capable of an operation control based on a wind speed at a distant forward position.

**[BACKGROUND ART]**

In recent years, from a perspective of preserving the environment, it is becoming popular to use a wind turbine generator utilizing wind power which generates electric power using wind in a form of renewable energy. Generally, in a wind turbine generator, a rotor formed by blades and a hub receives wind to rotate a main shaft connected to the rotor and the rotation of the main shaft is inputted to a generator to generate electric power in the generator.

The wind speed is not uniform in a plane (a rotor rotation plane) formed by a moving path of a blade during rotation of the rotor and thus loads acting on the blades are different from one blade to another, resulting in unbalanced wind load acting on the rotor. Further, the wind turbine generator is becoming larger from the perspective of profitability and the wind load acting on the blade tends to increase due to the increased size of the wind turbine generator.

Therefore, each part of the wind turbine generator, such as a main shaft bearing and a gearbox, is subjected to unbalanced and high load and this is responsible for short lifetime of each part of the wind turbine generator.

In view of this, it is desirable to apply the load evenly on each blade by adjusting the pitch angle of each blade independently using a pitch drive unit. However, even if the pitch angle control is initiated by the pitch drive unit once a gust reaches the blade, there is still a time lag between initiation and completion of the pitch angle change. Thugs, it is difficult to perform pitch angle adjustment in response to temporal change of the wind speed without delay.

Therefore, to equalize the load acting on each bade, it is desirable to obtain a speed of the wind the rotor is about to receive and to control the pitch angle before the wind actually reaches the rotor.

It is known that the rotation speed of the rotor at which a power coefficient Cp is maximum, varies depending on the wind speed. Thus, from the perspective of improving efficiency of the wind turbine generator, it is desirable to obtain the speed of the wind the rotor is about to receive and to perform the operation control of the wind turbine generator before the wind reaches the rotor.

In view of this, there is an attempt to measure the wind speed at a forward position distant from the wind turbine generator to measure the wind speed the rotor is going to receive in the future and then to use the measured wind speed to perform the operation control of the wind turbine generator.

Further, the wind speed at the forward position is measurable using a detector called LIDAR, Light Detection And Ranging. The LIDAR is a device for measuring a wind speed in a distant position. Typically, the LIDAR operates by illuminating the distant position using a laser beam, by detecting a scattered light from aerosols in the atmosphere at the distant position and finally by measuring the wind speed at the distant position based on the frequency shift (Doppler shift) between the laser beam and the scattered light.

For instance, Patent Literature 1 and Patent Literature 2 describe how to adjust the pitch angle of each blade independently based on the wind speed at the forward position ahead of the wind turbine generator (a future wind speed), which has been measured by the LIDAR attached to the hub, and to equalize the wind load acting on the rotor.

Further, Patent Literature 3 proposes an operation method for a wind turbine generator by adjusting the pitch angle of the blade so as to achieve a desired power coefficient Cp, based on the wind speed at the forward position (the future wind speed), which has been measured by a measuring apparatus attached to the nacelle.

Although not directly related to the technique of using the measured future wind speed for the operation control of the wind turbine generator, Patent Literature 4 proposes to predict the future wind speed from information currently obtained and to use the predicted future wind speed for the operation control of the wind turbine generator. In the operation method of the wind turbine generator described in Patent Literature 4, probability density function is obtained in advance from past wind speeds and using the probability density function, the future wind speed is predicted based on the present wind speed on the blade and the predicted future wind speed is used for the operation control.

[Citation List]

[Patent Literature]

[PTL1]

US7950901
[PTL 2]
US7281891
[PTL3]
US6320272
[PTL4]
US 2010/0237616
[PTL5]
GB 2 476 316 discloses a method and an apparatus for predictive control of a wind turbine generator.

**[SUMMARY]**

**[Technical Problem]**

Due to the effect of wind speed distribution (wind shear) formed in the vertical direction by friction against a surface of the ground (a surface of the sea in the case of an offshore wind turbine), the wind flowing into the rotor rotation plane of the wind turbine generator is not uniform with respect to the vertical direction. Further, the wind speed constantly changes and thus periodic load resulting from unbalanced wind load is on each part of the wind turbine. To reduce such load, the blade pitch angle is independently moved to reduce the unbalance of the wind load, thereby reducing the periodic load on each part of the wind turbine.

The advantage of using the measured future wind speed for the operation control of the wind turbine, is that the wind turbine generator can be controlled prior to the wind reaching the wind turbine generator. Therefore, in order to fully achieve the control purposes (load reduction, rotor speed control), it is necessary to make sampling frequency of a measuring device significantly higher than the control frequency. However, the sampling frequency of existing LIDAR is not high enough to enjoy the benefits of measuring the future wind speed. Particularly, in the case of measuring the wind distribution in the plane located anterior to the wind turbine generator, it is necessary to measure wind speed at more than one position in the anterior plane and thus the total sampling frequency becomes insufficient.

However, none of Patent Literatures 1 through 4 suggests how to perform the operation control based on the future wind speed in the case where the sampling frequency of the LIDAR for measuring the future wind speed is insufficient.

It is an object of at least one embodiment of the present invention which is defined by claim 1 to provide a wind turbine generator and an operation method of the wind turbine generator, by which the benefits of the operation control based on the future wind speed can be enjoyed even in the case where the sampling frequency of a wind speed measuring device for measuring the future wind speed is low.

**[Solution to Problem]**

An operation method for a wind turbine generator comprising a blade, according to at least one embodiment of the present invention, comprises the steps of:

obtaining a present wind speed acting on the wind turbine generator;
measuring a future wind speed acting on the blade after a prescribed period of time from a present point of time by measuring a wind speed at a measuring position anterior to the wind turbine generator;
predicting a wind speed in a period from the present point to a point after the prescribed period of time, based on at least the present wind speed and the future wind speed; and
controlling the wind turbine generator based on the predicted wind speed.

According to this operation method for the wind turbine generator, it is possible to predict the wind speed in the period from the present point to the point after the prescribed period of time (the period from the present to a point after lapse of the prescribed period of time), based on at least the present wind speed and a measurement value of the wind speed measured at the measuring position anterior to the wind turbine (the future wind speed). Therefore, even in the case where the sampling frequency of the wind speed measuring unit for measuring the future wind speed is low, the wind speed in the period from the present to the point when the measurement value of the future wind speed is obtained can be obtained by wind speed prediction. As a result, it is possible to effectively enjoy benefits of the operation control performed based on the future wind speed.

Further, according to this operation method, even in the case of using the wind speed measuring unit having low sampling frequency, it is still possible to effectively enjoy benefits of the operation control performed based on the future wind speed.

According to some embodiments, the step of controlling the wind turbine generator comprises the substeps of:

determining a command value for controlling pitch angle of the blade by at least a feedforward controller based on the predicted wind speed so as to reduce effect of wind load on the wind turbine generator; and

updating a control coefficient for the feedforward controller based on data indicating the effect of the wind load and the predicted wind speed.

As a result, by the feedforward control based on the predicted wind speed (the future wind speed), it is possible to adequately perform the pitch control of the blade before the wind reaches the wind turbine generator, thereby reducing the effect of the wind load. Further, the above pitch control can be achieved by a simple controller structure such as the feedforward controller and thus, it is possible to suppress increase of calculation load of the controller. Further, by updating the control coefficient for the feedforward controller based on the data indicating the effect of the wind load on the wind turbine and the predicted wind speed, it is possible to use an appropriate value as gain for the feedforward controller in accordance with wind condition change. More specifically, it is possible to improve robustness of a controller for performing the pitch control of the blade against the wind condition change.

In one embodiment, the above operation method comprises the step of:

obtaining vibration data indicating a level of vibration of a tower of the wind turbine generator caused by the wind load. wherein, in the substep of updating the control coefficient, a new value of the control coefficient is determined so as to reduce difference between the vibration data and a signal obtained by processing the predicted wind speed using a first transfer function and a second transfer function, the first transfer function representing an effect that an output signal from the feedforward controller has on the vibration data, the second transfer function having the same characteristic as the feedforward controller.

In this case, the control coefficient for the feedforward control is updated so as to reduce difference between the vibration data and the signal obtained by processing the predicted wind speed (the future wind speed) using the first transfer function and the second transfer function. As a result, by controlling the pitch angle of the blade based on the future wind speed, it is possible to effectively cancel, regardless of the wind condition change, vibration of the tower resulting from the wind load. Therefore, even when the wind condition changes, excellent damper effect for the tower can be achieved.

The above operation method may further comprise the steps of:

storing as a past wind speed the present wind speed having been obtained; and

obtaining an interpolation function based on the past wind speed, the interpolation function representing a temporal change from the present wind speed to the future wind speed,

wherein, in the step of predicting the wind speed, a wind speed in the period from the present point to the point after the prescribed period of time is predicted using the interpolation function.

As described above, by using the interpolation function which is obtained based on the past wind speed and which represents the temporal change from the present wind speed to the future wind speed, it is possible to improve accuracy of prediction of the wind speed in the period from the present to the time when the measurement value of the future wind speed is obtained. As a result, it is possible to more effectively enjoy benefits of the operation control based on the future wind speed.

Alternatively, the above operation method may further comprise the steps of:

storing as a past wind speed the present wind speed having been obtained:

obtaining a probability density function based on the past wind speed, the probability density function representing frequency of a wind speed that possibly occurs after the present wind speed; and

correcting the probability density function in accordance with the future wind speed,

wherein, in the step of predicting the wind speed, a wind speed in the period from the present point to the point after the prescribed period of time is predicted using the corrected probability density function.

As described above, by correcting, in accordance with the future wind speed, the probability density function obtained based on the past wind speed, it is possible to improve accuracy of prediction of the wind speed in the period from the present to the time when the measurement value of the future wind speed is obtained. As a result, it is possible to more effectively enjoy benefits of the operation control based on the future wind speed.

In the operation method for the wind turbine generator described in Patent Literature 4 (US 2010/0237617), the future wind speed is predicted solely based on the stored data of the past wind speed. Thus, rare cases such as gust are ignored and not reflected on the prediction result of the wind speed. To begin with, the operation control method of Patent Literature I is proposed to predict the future wind speed based on the stored data of the past wind speed by algorithm. There is no guarantee that the predicted wind speed actually takes place in the future and it is difficult to predict the future wind speed with accuracy high enough for the practical use.

On the other hand, in the above operation control, the probability density function is corrected in accordance with the measurement value of the future wind speed measured by the wind speed measuring unit and then used for predicting the wind speed and thus, it is possible to reflect rare conditions such as gust on the prediction result of the wind speed and also to predict the future wind speed with accuracy high enough for the practical use.

In the above operation method for the wind turbine generator, in the step of measuring the future wind speed, a wind speed may be measured selectively in a region corresponding to the blade at the measuring position.

By selectively obtaining minimum wind speed information (the wind speed in a region corresponding to the blade) necessary for performing the operation control of the wind turbine generator based on the future wind speed, even in the case of using the wind speed measuring unit having low sampling frequency, it is still possible to effectively enjoy benefits of the operation control performed based on the future wind speed.

A wind turbine generator according to at least one embodiment of the present invention comprise:

a blade;
a present wind speed obtaining unit for obtaining a present wind speed on the wind turbine generator;
a wind speed measuring unit for measuring a future wind speed acting on the blade after a prescribed period of time from a present point of time by measuring a wind speed at a measuring position anterior to the wind turbine generator;
a wind speed predicting unit for predicting a wind speed in a period from the present point to a point after the prescribed period of time, based on at least the present wind speed and the future wind speed; and
an operation control unit for controlling the wind turbine generator based on the wind speed predicted by the wind speed predicting unit.

In this wind turbine generator, the wind speed predicting unit is configured to predict the wind speed in the period from the present point to the point after the prescribed period of time, based on at least the present wind speed and the future wind speed. Therefore, even in the case where the sampling frequency of the wind speed measuring unit for measuring the future wind speed is low, the wind speed in the period from the present to the point when the measurement value of the future wind speed is obtained can be obtained by wind speed prediction. As a result, it is possible to effectively enjoy benefits of the operation control performed based on the future wind speed.

Further, according to this wind turbine generator, even in the case of using the type of wind speed measuring unit having low sampling frequency, it is still possible to effectively enjoy benefits of the operation control performed based on the future wind speed.

In some embodiments, the operation control unit comprises:

a feedforward controller for determining a command value for controlling pitch angle of the blade based on the predicted wind speed so as to reduce effect of wind load on the wind turbine generator; and
a coefficient update part for updating a control coefficient for the feedforward controller based on data indicating the effect of the wind load and the predicted wind speed.

As a result, by the feedforward control based on the predicted wind speed (the future wind speed), it is possible to adequately perform the pitch control of the blade before the wind reaches the wind turbine generator, thereby reducing the effect of the wind load. Further, the above pitch control can be achieved by a simple controller structure such as the feedforward controller and thus, it is possible to suppress increase of calculation load of the controller.

Further, by updating the control coefficient for the feedforward controller based on the data indicating the effect of the wind load on the wind turbine and the predicted wind speed, it is possible to use an appropriate value as gain for the feedforward controller in accordance with wind condition change. More specifically, it is possible to improve robustness of a controller for performing the pitch control of the blade against the wind condition change.

In another embodiment, the above wind turbine generator further comprises:

a data obtaining unit for obtaining vibration data indicating a level of vibration of a tower of the wind turbine generator caused by the wind load,
wherein the data obtaining unit is configured to determine a new value of the control coefficient so as to reduce difference between the vibration data and a signal obtained by processing the predicted wind speed using a first transfer function and a second transfer function, the first transfer function representing an effect that an output signal from the feedforward controller has on the vibration data, the second transfer function having the same characteristic as the feedforward controller.

In this case, the control coefficient for the feedforward control is updated so as to reduce difference between the vibration data and the signal obtained by processing the predicted wind speed (the future wind speed) using the first transfer function and the second transfer function. As a result, by controlling the pitch angle of the blade based on the future wind speed, it is possible to effectively cancel, regardless of the wind condition change, vibration of the tower resulting from the wind load. Therefore, even when the wind condition changes, excellent damper effect for the tower can be achieved.

The above wind turbine generator may further comprise:

a memory unit for storing as a past wind speed the present wind speed having been obtained by the present wind speed obtaining unit,
wherein the wind speed predicting unit is configured to obtain an interpolation function based on the past wind speed stored in the memory unit, the interpolation function representing a temporal change from the present wind speed to the future wind speed, and to predict a wind speed in the period from the present point to the point after the prescribed period of time using said interpolation function.

As described above, by using the interpolation function which is obtained based on the past wind speed and which represents the temporal change from the present wind speed to the future wind speed, it is possible to improve accuracy of prediction of the wind speed in the period from the present to the time when the measurement value of the future wind speed is obtained. As a result, it is possible to more effectively enjoy benefits of the operation control based on the future wind speed.

Alternatively, the above wind turbine generator may further comprise:

a memory unit for storing as a past wind speed the present wind speed having been obtained by the present wind speed obtaining unit; and
a probability density function calculation unit for obtaining, based on the past wind speed stored in the memory unit, a probability density function representing frequency of a wind speed that possibly occurs after the present wind speed; and
a probability density function correction unit for correcting the probability density function in accordance with the future wind speed,
wherein the wind speed predicting unit is configured to predict a wind speed in the period from the present point to the point after the prescribed period of time is predicted using the corrected probability density function.

As described above, by correcting, in accordance with the future wind speed, the probability density function obtained based on the past wind speed, it is possible to improve accuracy of prediction of the wind speed in the period from the present to the time when the measurement value of the future wind speed is obtained. As a result, it is possible to more effectively enjoy benefits of the operation control based on the future wind speed.

Further, by using the probability density function corrected in accordance with the future wind speed measured by the measuring unit to predict the wind speed, it is possible to reflect rare conditions such as gust on the prediction result of the wind speed and also to predict the future wind speed with accuracy high enough for the practical use.

Moreover, the above wind turbine generator may further comprises:

a measuring-unit control unit for controlling the wind speed measuring unit to measure a wind speed is measured selectively in a region corresponding to the blade at the measuring position.

By controlling the wind speed measuring unit to selectively obtain minimum wind speed information (the wind speed in a region corresponding to the blade) necessary for performing the operation control of the wind turbine generator based on the future wind speed, even in the case of using the wind speed measuring unit having low sampling frequency, it is still possible to effectively enjoy benefits of the operation control performed based on the future wind speed.

[Advantageous Effects]

According to the present invention, the wind speed in the period from the present to the point when the measurement value of the future wind speed is obtained, is predicted based on at least the wind speed (the present wind speed) presently acting on the wind turbine generator and the wind speed (the future wind speed) measured at the measuring position anterior to the wind turbine. Therefore, even in the case where the wind speed measuring unit has low sampling frequency, it is still possible to effectively enjoy benefits of the operation control performed based on the future wind speed.

Further according to the present invention, the sampling frequency of the wind speed measuring unit can be lowered and thus it is possible to effectively enjoy benefits of the operation control performed based on the future wind speed while suppressing the measuring load of the wind speed measuring unit.

Furthermore, according to the present invention, even in the case of using the wind speed measuring unit having low sampling frequency, it is still possible to effectively enjoy benefits of the operation control performed based on the future wind speed.

**[BRIEF DESCRIPTION OF DRAWINGS]**

[FIG.1] FIG.1 is an illustration of a general structure of a wind turbine generator according to a first embodiment.
[FIG.2] Fig.2 is an illustration of an example of a measuring area of a forward anemometer.
[FIG.3] FIG.3 is a block diagram illustrating the control of the wind turbine generator of Fig.1.
[FIG.4] FIG.4 is an explanatory diagram of how to predict the wind speed in a wind speed predicting unit.
[FIG.5] FIG.5 is a block diagram illustrating the control of the wind turbine generator according to a second embodiment.
[FIG.6] FIG.6 is a graph showing one example of a probability density function.
[FIG.7] FIG.7 is a graph showing one example of correction of the probability density function.
[FIG.8] FIG.8 is explanatory diagram illustrating how to predict the wind speed in the wind speed predicting unit.
[FIG.9] FIG.9 is a block diagram of an operation control unit according to one embodiment.
[FIG.10] FIG.10 is a block diagram of a coefficient update part according to one embodiment.

**[DETAILED DESCRIPTION]**

Embodiments of the present invention will now be described in detail with reference to the accompanying drawings. It is intended, however, that unless particularly specified in these embodiments, dimensions, materials, shape, its relative position and the like shall be interpreted as illustrative only and not limitative of the scope of the present invention.

(FIRST EMBODIMENT)

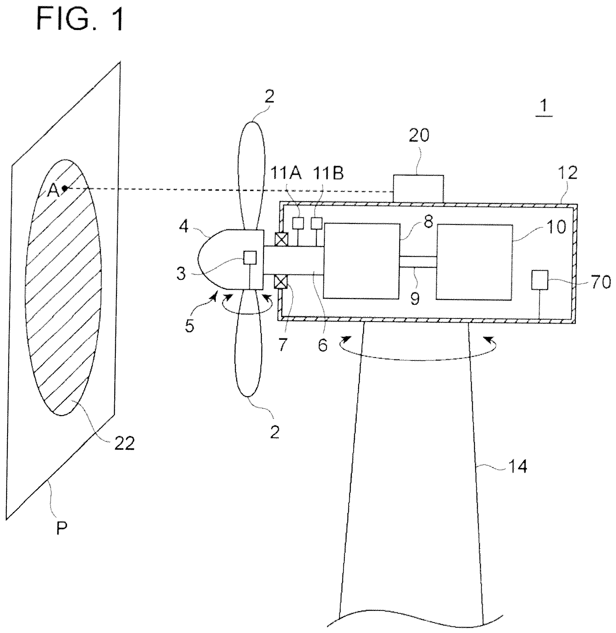

FIG.1 is an illustration of a general structure of a wind turbine generator according to a first embodiment. In an exemplary embodiment illustrated in the drawing, a wind turbine generator 1 is provided with at least one blade 2, a hub (a rotor hub) 4 to which the blade 2 is mounted, a main shaft 6 connected to the hub 4, a speed increaser 8 for accelerating rotation of the main shaft 6, and a generator 10 connected to an output shaft 9 of the speed increase 8. Further, the main shaft 6 is rotatably supported by a main bearing 7 to a nacelle 12.

Upon reception of the wind by the blade 2, a rotor 5 formed by the blade 2 and the hub 4 rotates. Once the rotor 5 rotates, the main shaft 6 rotates with the rotor 5. The rotation of the main shaft 6 is accelerated by the gearbox 8 and then inputted to the generator 10 via the output shaft 9. As a result, electric power is generated by the generator 10. Further, the rotation speed and the angular position of rotor 5 are detected by a rotation speed sensor 11A and an azimuth angle detector 11B and then used for controlling a wind turbine controller 30. The wind turbine controller is described later in details.

Furthermore, any type of gearbox may be used as the gearbox 8, such as a gearbox formed by gears and a gearbox formed by a hydraulic transmission having a hydraulic pump and a hydraulic motor. Alternatively, the rotation of the main shaft 6 may be directly transmitted to the generator without the gearbox 8.

In some embodiments, the wind turbine generator 1 includes a data obtaining unit 70 for obtaining data indicating effect that the wind load has on the wind turbine generator 1. The data obtained by the data obtaining unit 70 is used for the operation control of the wind turbine generator 1.

In one embodiment, the data obtaining unit 70 is configured to obtain vibration data indicating a level of vibration of the tower 14 caused by the wind load. In this case, the data obtaining unit 70 may be an acceleration sensor provided in the nacelle 12 and configured to measure acceleration of the nacelle 12. Alternatively, the data obtaining unit 70 may be an acceleration sensor installed on top of the tower 14 and configured to measure acceleration of the tower 14.

In the wind turbine generator 1, a forward anemometer 20 is provided to measure a wind speed (a future wind speed) that will act on the rotor 5 after a prescribed period of time from the present point by measuring a wind speed at a forward position A located forward of the rotor 5. The distance between the rotor 5 and the measuring position A may be about 100 to 300 meters.

The principle of wind speed measurement by the forward anemometer 20 may be to obtain the wind speed from the frequency shift (Doppler shift) between the electromagnetic wave (e.g. laser beam) emitted to the measuring position A and the scattered light from aerosols in the atmosphere at the position. There is LIDAR as one form of the forward anemometer 20.

The forward anemometer 20 may be attached to the nacelle as illustrated in FIG.1. Alternatively, the forward anemometer 20 may be attached to the hub 4. As a result, even in the case where the nacelle 12 is controlled to turn in the direction of arrow in FIG.1 so as to follow the wind direction, it is easy to measure the wind speed at the forward position located upwind of the rotor 5.

Further, described in the exemplary embodiment illustrated in FIG.1 is an upwind wind turbine whose rotor 5 faces upwind. However, in other embodiments, the wind turbine generator 1 is a downwind wind turbine whose rotor 5 faces downwind. In the case of the wind turbine generator 1 constituted by the downwind wind turbine, the forward anemometer 20 is configured to measure the wind speed at a remote forward position located on an opposite side of the nacelle 12 from the rotor 5 (upwind side).

Further, the wind speed measurement using the forward anemometer 20 is performed at a plurality of positions in a measuring area 22 within a plane P in front of the rotor 5 so as to obtain wind speed distribution in the measuring area 22. For instance, in the case of the forward anemometer being formed by the LIDAR, the wind speed may be measured at a plurality of positions within the measuring area 22 by adjusting an irradiation angle of the laser beam and scanning the measuring area 22.

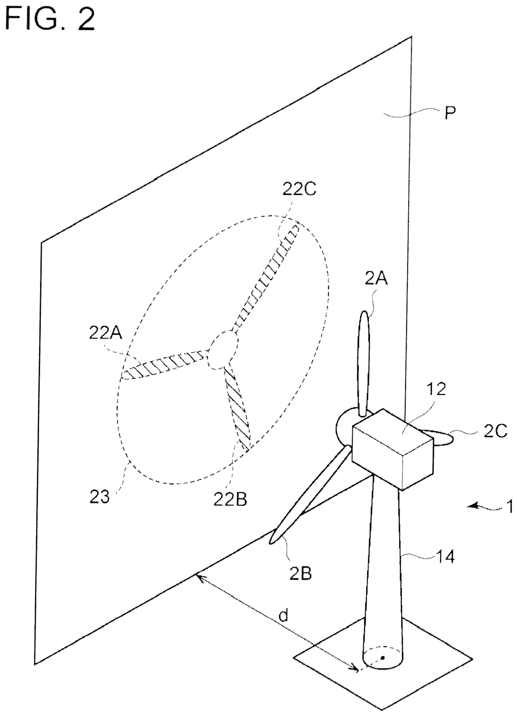

FIG.2 is an illustration of an example of the measuring area 22 of the forward anemometer 20. In FIG.2, the plane P extends facing the rotor rotation plane at a distance d from the wind turbine generator 1.

The measuring area 22 of the forward anemometer 20 may be regions 22A-22C at the position (the measuring position) with distance d ahead of the wind turbine generator 1 as illustrated in FIG.2. Herein, the regions 22A-22C within the plane P correspond to the blades 2A-2C, respectively, and are set so as to be able to obtain minimum wind speed information necessary for the operation control of the wind turbine generator 1 based on the future wind speed. For instance, the region 22A-22C may be the regions where the wind which will eventually hit each blade 2A-2C passes through at the measurement position. Further, the wind speed may be measured by the forward anemometer 20 only in an important section of each region 22A-22C (e.g. a section corresponding to a section near a tip part of each region 22A-22C).

Furthermore, the regions 22A-22C changes from moment to moment in response to rotation of the rotor 5. Thus, the regions 22A-22C in the measuring area 22 are set every time the wind speed is measured by the forward anemometer 20, in consideration of the rotation speed of the rotor 5 and the distance d.

As described above, instead of setting the entire circular region 23 corresponding to the rotor rotation plane as the measuring area 22, the regions 22A-22C selected from the circular region 23 in the circumferential direction is set as the measuring area 22. As a result, the future wind speed needed for the operation control of the wind turbine generator 1 can be measured with fewer samplings by the forward anemometer 20. Therefore, even in the case where the sampling frequency of the forward anemometer 20 is low, it is possible to effectively enjoy benefits of the operation control performed based on the future wind speed.

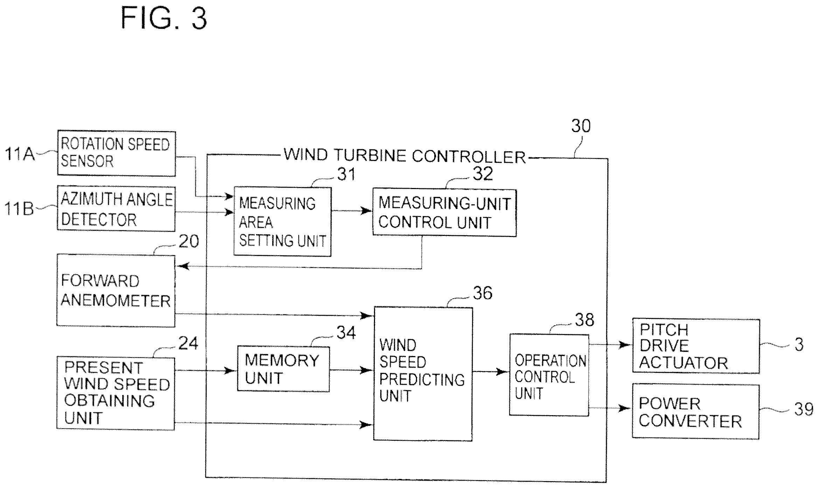

FIG.3 is a block diagram illustrating the control of the wind turbine generator I illustrated in FIG.1. As shown in FIG.3. the wind turbine controller 30 is configured to control the operation of the wind turbine generator 1 based on measurement results from the rotation speed sensor 11A, the azimuth angle detector 11B and the forward anemometer 20 and information regarding the present wind speed from a present wind speed obtaining unit 24.

The wind turbine controlled 30 is provided with a measuring area setting unit 31 for setting the measuring area 22 of the forward anemometer 20, a measuring-unit control unit 32 for controlling the forward anemometer 20, a memory unit 34 for storing information regarding past wind speed, a wind speed predicting unit 36 for predicting a wind speed in a period from the present point to a point when a measurement value of the future wind speed is obtained by the forward anemometer 20, and an operation control unit 38 for controlling the wind turbine generator 1.

The measuring-area setting unit 31 sets the regions 22A-22C corresponding to the blades 2A-2C as the measuring area 22, in accordance with the rotation speed and the angular position of the rotor 5 detected by the rotation speed sensor 11A and the azimuth angle detector 11B, respectively. Then, the measuring- unit control unit 32 controls the forward anemometer 20 based on the measuring area 22 set by the measuring-area setting unit 31. More specifically, in the case of the forward anemometer 20 being formed by LIDAR, the laser irradiation angle of the LIAR is adjusted and the measuring area 22 is scanned to measure the wind speed in the measuring area 22.

The wind speed measured by the forward anemometer 20 is the future wind speed that will act on the blade after a prescribed period of time from the present point. The prescribed period of time herein indicates the time it takes for the wind whose speed is measured by the forward anemometer 20 to reach the rotor 5 from the measuring position. The prescribed period of time can be calculated based on the distance d between the wind turbine generator 1 and the measuring position (technically, a distance between the rotor 5 and the measuring position) and the wind speed V.

In the memory unit 34 of the wind turbine controller 30, past wind speed having acted on the blade 2 is stored. More specifically, the memory unit 34 successively receives from the present wind speed obtaining unit 24 the wind speed of the wind presently acting on the wind turbine generator 1 (specifically, the blade 2) and stores it as a past wind speed at a respective time.

The present wind speed obtaining unit 24 may obtain the wind speed of the wind presently acting on the wind turbine generator 1 (specifically, the blade 2) from a variety of parameters indicating a present state of the wind turbine generator 1. For instance, the present wind speed obtaining unit 24 may obtain the wind speed of the wind presently acting on the blade 2 from parameters such as the rotation speed of the rotor 5, the pitch angle of the blade and the power generated by the generator 10 (output of the wind turbine generator).

The present wind speed obtaining unit 24 may obtain the wind speed of the wind presently acting on the blade 2 from a wind speed in the periphery of the blade measured by any type of anemometer such as a cup-type anemometer and LIDAR. For instance, by considering effect of a wake generated downstream of the rotor 5, the wind speed measured by the cup-type anemometer attached in the periphery of the nacelle 12 may be corrected to estimate the wind speed of the wind presently acting on the blade 2.

To the wind speed predicting unit 36, the present wind speed obtained by the present wind speed obtaining unit 24 is sent as well as the wind speed measured by the forward anemometer 20 (the future wind speed) and the past wind speed stored in the memory unit 34. When receiving this information, the wind speed predicting unit 36 predicts a wind speed in a period from the present point to the point when a measurement value of the future wind speed is obtained by a method to be hereinafter described.

Then, the operation control unit 38 of the wind turbine control 38 controls operation of the wind turbine generator based on the wind speed predicted by the wind speed predicting unit 36. More specifically, the operation control unit 38 may controls the actuator 3 based on the wind speed predicted by the wind speed predicting unit 36 to adjust the pitch angle of each blade independently before the wind reaches the rotor 5. The operation control unit 38 may, alternatively, control operation of the wind turbine generator 1 based on the wind speed predicted by the wind speed predicting unit 36 to rotate the rotor 5 at the rotation speed at which a desired power coefficient Cp can be obtained, before the wind reaches the rotor 5. Further, in order to control the rotation speed of the rotor 5, the torque of the generator 10 may be adjusted by controlling a power converter 39 provided between the generator 10 and the grid. In this case, the power converter 39 means, for instance, is an AC-DC-AC converter.

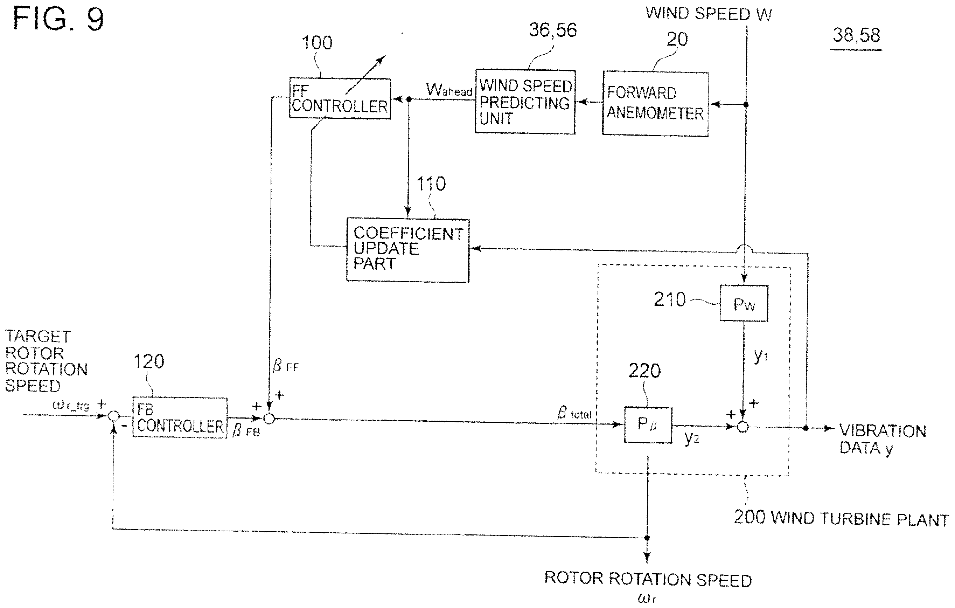

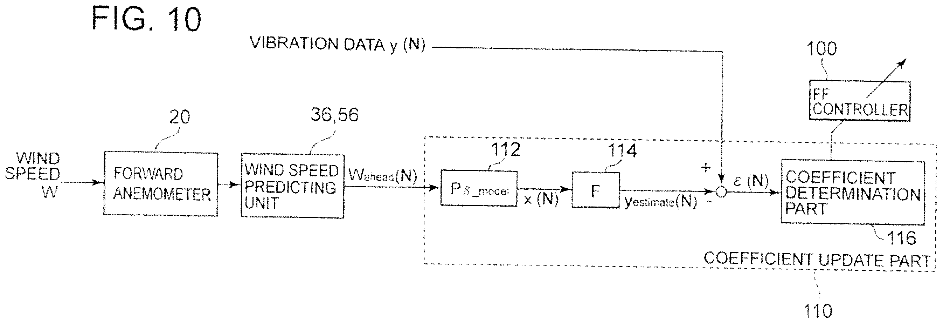

Further, the operation control unit 38 is described later in details in reference to FIG.9 and FIG.10.

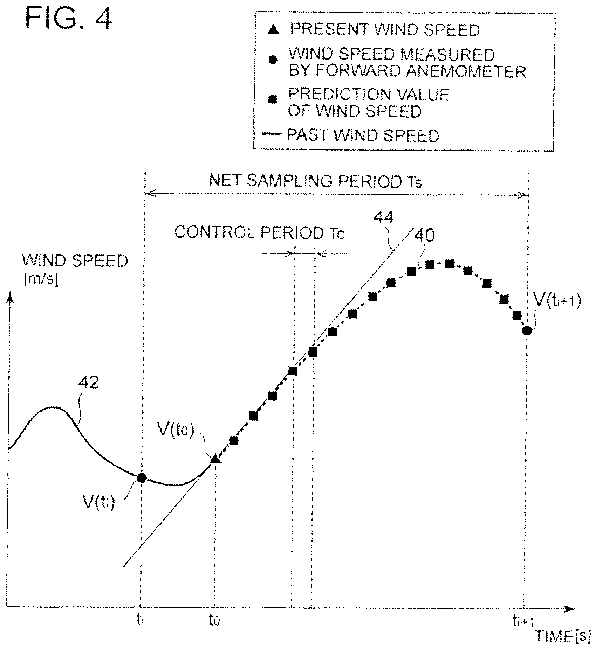

Described below is the process performed by the wind speed predicting unit 36 to predict the wind speed in the period from the present point to the point when the measurement value of the wind speed can be obtained by the forward anemometer 20. FIG.4 is an explanatory diagram of how to predict the wind speed in the wind speed predicting unit 36 and is the graph showing the temporal change of the wind speed of the wind hitting a prescribed position of the blade 2.

As illustrated in FIG.4, the wind whose speed has been measured by the forward anemometer 20 reaches the blade 2 at time $t_i$ and time $t_{i+1}$. More specifically, the wind speed of the wind acting on the blade at time $t_i$ and time $t_{i+1}$ can be obtained in advance from the measurement result of the forward anemometer 20.

In this process, the wind speed is measured by the forward anemometer 20 not continuously but intermittently. The measurement value of the wind speed measured by the forward anemometer 20 is obtained discretely in terms of time. Thus, depending on the sampling frequency of the forward anemometer 20, a control period Tc of the operation control unit 38 is smaller than a time interval to obtain the measurement value of the wind speed measured by the forward anemometer 20 (a net sampling period Ts Ts= $t_{i+1}$-$t_i$) in some cases as illustrated in FIG.4. In such cases, in order to achieve the operation control based on the future wind speed before the wind reaches the rotor 5, it is necessary to know in some way the wind speed of a period between time to of the present and time $t_{i+1}$ when the measurement value of the wind speed is next obtained by the forward anemometer 20.

Therefore, in this embodiment, the wind speed in the period from time to to time $t_{i+1}$ is predicted by the wind speed predicting unit 36.

More specifically, the wind speed predicting unit 36 obtains interpolation function 40 representing the temporal change of the wind speed from the present wind speed $V(t_0)$ at time to obtained by the present wind speed obtaining unit 24 to the future wind speed $V(t_{i+1})$ at time $t_{i+1}$ measured by the forward anemometer 20. Using the interpolation function 40m the wind speed at any time of the period from time $t_0$ to time $t_{i+1}$ can be predicted. For instance, as illustrated in FIG.4, wind speed at a plurality of points in the control period Tc may be predicted as illustrated in FIG.4.

The interpolation function 40 can be obtained by interpolating the wind speed $V(t_0)$ at time $t_0$ obtained by the present wind speed obtaining unit 24 and the future wind speed $V(t_{i+1})$ at time $t_{i+1}$ measured by the forward anemometer 20 by any method. For instance, in the case of interpolation by a linear function which is linear interpolation method, a line between the present wind speed $V(t_0)$ and the future wind speed $V(t_{i+1})$ may be obtained as the interpolation function 40.

When obtaining the interpolation function 40, a past wind speed $V(t<t_0)$ at time prior to the time to stored in the memory unit 34 may be taken into account. For instance, to smoothly connect the interpolation function 40 and a change function 42 of the wind speed V(t≤ to) between the past and the present (time to), continuity of derived function between the interpolation function 40 and the change function 42 at time $t_0$ may be set as a boundary condition. Under such boundary condition, the interpolation function 40 may be obtained by polynominal interpolation. Further, in the case of the interpolation function 40 satisfying the continuity of the derived function as the boundary condition, the interpolation function 40 and the change curve 42 have an approximately common tangent line 44 at time to as shown in FIG.4.

As described above, in this embodiment, the wind speed in the period from time to to time $t_{i+1}$ is predicted by the wind speed predicting unit 36 based on at least the present wind speed $V(t_0)$ obtained by the present wind speed obtaining unit 24 and the future wind speed $V(t_{i+1})$ measured by the forward anemometer 20. Thus, even if the sampling frequency of the forward anemometer 20 is low, the wind speed in the period from time $t_0$ to time $t_{i+1}$ can be obtained using the wind speed predicting unit 36 to predict the wind speed. As a result, it is possible to effectively enjoy benefits of the operation control based on the future wind speed.

Further, according to this embodiment, even in the case of using the forward anemometer 20 whose sampling frequency is low, it is possible to effectively enjoy benefits of the operation control based on the future wind speed.

Furthermore, according to this embodiment, the following contingent benefits can be enjoyed.

First, the time interval $(t_{i+1}-t_i)$ for obtaining the measurement value of the wind speed measured by the forward anemometer 20 depends on the wind speed and hence is not constant. More specifically, even if the wind speed is measured by the forward anemometer 20 at a constant sampling period, the time for the wind whose speed has been measured to reach the rotor 5, depends on the wind speed. Thus, the net sampling cycle $T_s$ of measuring the future wind speed, which is the interval of time $(t_i, t_{i+1})$ for the wind to actually reach the blade 2 might change in accordance with the wind speed. As described above, the fact that the net sampling cycle $T_s$ is not constant is not preferable in terms of control. In this regard, according to this embodiment, the operation control of the wind turbine generator 1 is performed by the operation control unit 38 based on the wind speed predicted by the wind speed predicting unit 36. Thus, the operation control is not affected by change in the net sampling period $T_s$ of measuring the future wind speed.

Secondly, the wind speed measured by the forward anemometer 20 possibly changes while the wind travels from the measuring position to the rotor 5 and the wind speed measured by the forward anemometer 20 does not necessarily reach the periphery of the rotor 5 after a time lag. As factors that change the wind speed without being maintained while the wind travels from the measuring position to the rotor 5, presence of the rotor 5 may affect the wind condition on the upstream side of the rotor 5, or undulation of the ground surface may affect the wind condition. Thus, by operating the wind turbine generator 1 solely based on the measurement value of the forward anemometer 20, the operation control is performed ignoring change in the wind speed in the period when the wind travels from the measuring position to the rotor 5 and hence it may be difficult to achieve intended control performance. In view of this, according to this embodiment, not just the future wind speed $V(t_{i+1})$ measured by the forward anemometer 20 but also the present wind speed $V(t_0)$ obtained by the present wind speed obtaining unit 24 are taken into account to predict the wind speed in the period from time to to time $t_{i+1}$. Therefore, the wind speed $V(t_0)$ of the wind that has actually reached the rotor 5 can be reflected in the operation control, thereby improving control performance.

The wind turbine generator according to a second embodiment is described. The wind turbine generator of this embodiment is substantially the same as the wind turbine generator 1 of the first embodiment except for the method of predicting the wind speed in the period from the present point (t=$t_0$) to the point (t=$t_{i+1}$) when the wind whose speed has been measured by the forward anemometer 20 actually reaches the rotor 5. Herein, the same reference numerals are given without adding explanations for those configurations that are the same as the wind turbine generator 1 and mainly configurations different from the wind turbine generator 1 are described.

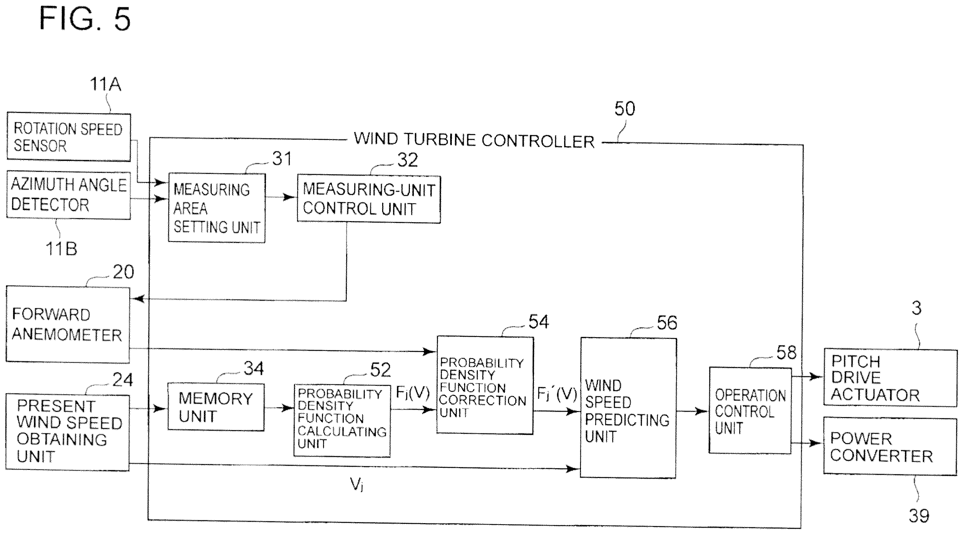

FIG.5 is a block diagram illustrating the control of the wind turbine generator according to the second embodiment. As illustrated in FIG.5, similarly to the wind turbine controller 30 of the first embodiment, a wind turbine controller 50 is provided with the measuring area setting unit 31, the measuring-unit control unit 32, and the memory unit 34. Further, the wind turbine controller 50 is additionally provided with a probability density function calculation unit 52 for calculating probability density function F(V) based on the past wind speed stored in the memory unit 34, a probability density function correction unit 54 for correcting the probability density function F(V), a wind speed predicting unit 56 for predicting a wind speed in a period from time $t_0$ to time $t_{i+1}$ using the corrected probability density function F(V), and an operation control unit 58 for controlling operation of the wind turbine generator 1 based on the predicted wind speed.

The memory unit 34 successively receives the present wind speed obtained by the present wind speed obtaining unit 24 and stores it as the past wind speed. Based on the past wind speed stored in the memory unit 34, the probability density function calculation unit 52 calculates the probability density function representing frequency of a wind speed that possibly occurs at a certain point of time in the future.

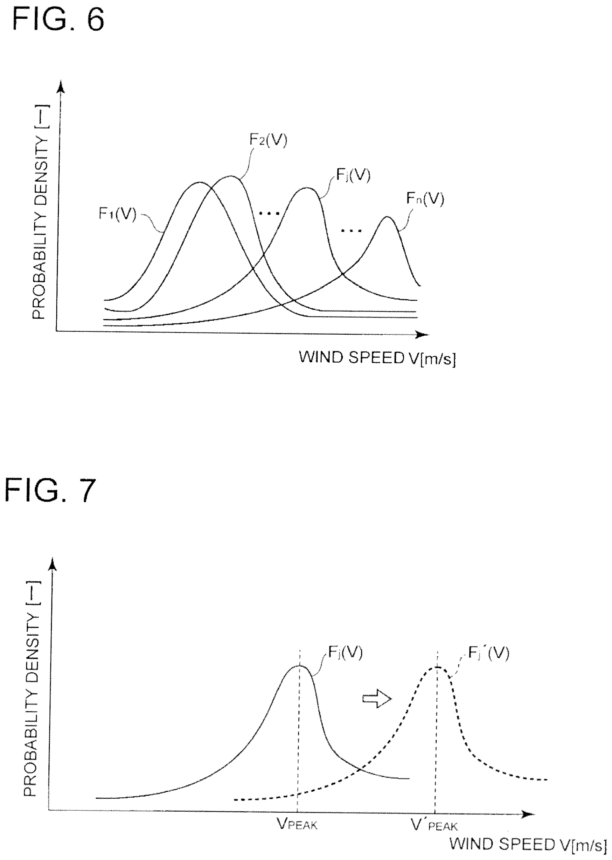

FIG.6 is a graph showing one example of a probability density function. As shown in FIG.6, the probability density function $F_j(V)$ is defined for each of n types of present wind speed $V_j$ (j=1, 2, ...n and n is an integer not smaller than 2). In the case where the present wind speed is $V_j$, each probability density function $F_j(V)$ represents frequency of a wind speed that possibly occurs at a certain point of time in the future. The certain point of time in the future at which the wind speed occurrence frequency is described by each probability density function $F_j(V)$, corresponds to a point of time which the wind speed predicting unit 56 aims to predict the wind speed. The certain point of time can be arbitrarily set to make easier the operation control by the operation control unit 58 described later.

Further, the probability density function calculation unit 52 may calculate a probability density function $F_{jk}(V)$ for various points of elapsed time $t_k$ (k=1, 2, ....l and k is an integer not smaller than 2) from the present point. As a result, it is possible to predict the wind speeds at a plurality of points of elapsed time using the wind speed predicting unit 56. For instance, by calculating the probability density function $F_{jk}(V)$ of elapsed time $T_k$ for each control cycle Tc, it is possible to predict the wind speed at a plurality of time points for each control cycle Tc using the wind speed predicting unit 56.

The probability density function $F_j(V)$ is calculated by the probability density function calculation unit 52 based on only the past wind speed stored in the memory unit 34 and represents probability of the wind speed that possibly occurs at a certain point of time in the future. Thus, it might be difficult to accurately predict the future wind speed at the certain point in the future using the probability density function $F_j(V)$.

In view of this, in this embodiment, the probability density function $F_j(V)$ is corrected in the probability density function correction unit 54 in accordance with the wind speed measured at the forward measuring position by the forward anemometer 20 (the future wind speed measured by the forward anemometer 20).

FIG.7 is a graph showing one example of correction of the probability density function.

For instance, if the future wind speed measured by the forward anemometer 20 is greater than the present wind speed $V_j'$, as illustrated in FIG.7, the probability density function $F_j(V)$ is corrected by the probability density function correction unit 54 so that the wind speed at which the probability density becomes maximum is shifted to the right in the drawing from $V_{PEAK}$ to $V_{PEAK}'$. As a result, new probability density function Fj'(V) can be obtained. In contrast, if the future wind speed measured by the forward anemometer 20 is smaller than the present wind speed $V_j$, the wind speed $V_{PEAK}$ at which the probability density becomes maximum is shifted to the left in the drawing to obtain the probability density function Fj'(V).

In this process, the probability density function $F_j(V)$ may be corrected based on past wind speed data stored in the memory unit 34. More specifically, using the past wind speed data, the frequency of the wind speed may be obtained, which possibly occurs at a certain point in the future under the condition that the present wind speed is $V_j$ and the wind speed measured by the forward anemometer 20 appear at time $t_{i+1}$ in the future. For instance, in the case where the present wind speed is 15 m/s and the wind speed at time $t_{i+1}$ in the future is already known from the measurement result of the forward anemometer to be 20 m/s, wind speed of a similar case among the past wind speed data is taken into account to obtain the frequency of the wind speed that possibly occurs at the certain point in the future.

As long as the wind speed measured by the forward anemometer 20 (the future wind speed) is reflectible, the correction method of the probability density function $F_j(V)$ should not be limited to any particular method. For instance, the probability density function Tj'(V) may be obtained by properly shifting the probability density function $F_j(V)$ rightward or leftward in the drawing in accordance with comparison result of comparing the wind speed measured by the forward anemometer with the present wind speed $V_j$, while keeping the original shape of the curve of the probability density function $F_j(V)$.

Then, the wind speed predicting unit 56 receives from the probability density function correction unit 54 the corrected probability density function Fj'(V) corresponding to the present wind turbine $V_j$ obtained by the present wind speed obtaining unit 24 and then using this probability density function Fj'(V), predicts the wind speed at a certain point in the future. For instance, the wind speed predicting unit 56 may predict the wind speed $V_{PEAK}'$ at which the probability density of the corrected probability density function Fj'(V) becomes maximum is the wind speed as the wind speed at the certain point in the future.

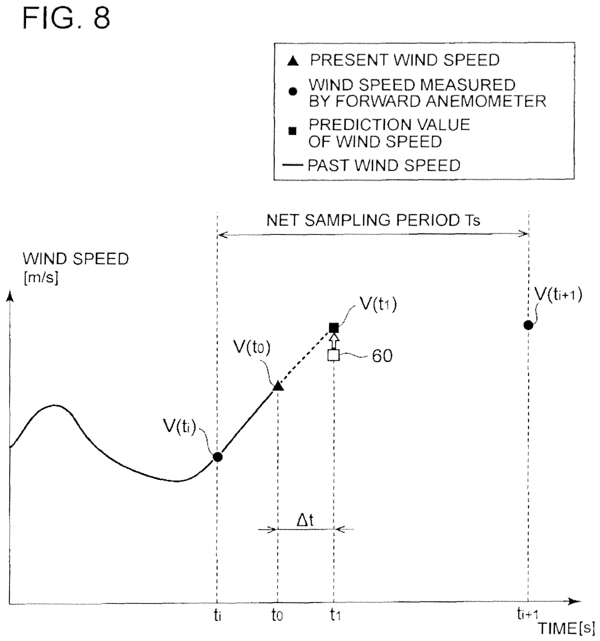

The certain point in the future whose wind speed is predicted by the wind speed predicting unit 56 may be time $t_1$ corresponding to the control period closest to the present time $t_0$ (see FIG.8). As a result, the wind speed predicted by the wind speed predicting unit 56 may be used as is for the operation control by the operation control unit 58.

Further, the wind speed predicting unit 56 may be configured to predict the wind speed depending on various conditions by correcting the probability density functions $F_j(V)$, $F_j'(V)$ in accordance with time conditions such as time of day and season and weather conditions such as rain and typhoon.

The wind speed predicted by the wind speed predicting unit 56 is sent to the operation control unit 58 and then used for the operation control of the wind turbine generator 1. More specifically, the operation control unit 58 may control the actuator based on the wind speed of a certain point in the future predicted by the wind speed predicting unit 56 to adjust the pitch angle of each blade 2 independently before the wind reaches the rotor 5. The operation control unit 58 may, alternatively, control operation of the wind turbine generator 1 based on the wind speed at the certain point in the future predicted by the wind speed predicting unit 56 to rotate the rotor 5 at the rotation speed at which a desired power coefficient Cp can be obtained, before the wind reaches the rotor 5. Further, in order to control the rotation speed of the rotor 5, the torque of the generator 10 may be adjusted by controlling the power converter 39 (e.g. an AC-DC-AC converter) provided between the generator 10 and the grid.

Further, the operation control unit 58 is described later in details in reference to FIG.9 and FIG.10.

Described below is the process performed by the wind speed predicting unit 56 to predict the wind speed at a certain point in the future. FIG.8 is an explanatory diagram of how to predict the wind speed in the wind speed predicting unit 56 of the wind turbine controller 50 shown in FIG.5 and is the graph showing the temporal change of the wind speed of the wind hitting a prescribed position of the blade 2.

Prior to the wind speed prediction by the wind speed predicting unit 56, the probability density function $F_j(V)$ is prepared in advance by the probability density function calculation unit 52 for each of n types of present wind speed $V_j$ (j=1, 2, ...n and n is an integer not smaller than 2). More specifically, based on the past wind speed stored in the memory unit 34, the probability density function calculation unit 52 calculates the probability density function $F_j(V)$ representing frequency of a wind speed that possibly occurs at a point after lapse of time $\Delta t$ ($=t_1-t_0$) from the present time.

Further, as storing of the past speed data in the memory unit 34 progresses, the probability density function $F_j(V)$ possibly changes. In view of this, the probability density function $F_j(V)$ may be updated by regularly calculating the probability density function $F_j(V)$ by the probability density function calculation unit 52.

Then, once the wind speed $V(t_{i+1})$ at time $t_{i+1}$ in the future is obtained from the measurement result of the forward anemometer 20, the probability density function correction unit 54 corrects the probability density function $F_j(V)$ in accordance with this wind speed $V(t_{i+1})$ so as to obtain the corrected probability density function $F_j'(V)$. This corrected probability density function $F_j'(V)$ is then used for the wind speed prediction performed by the wind speed predicting unit 56.

The wind speed predicting unit 56 predicts the wind speed $V(t_1)$ at time $t_1$ after lapse of time $\Delta t$ from the present time, using the corrected probability density function $F_j'(V)$ corresponding to the wind speed $V_j$ (i.e. wind speed $V(t_0)$) at the present time (t= $t_0$) obtained by the present wind speed obtaining unit 24.

FIG.8 also shows a prediction value of the wind speed 60 that is obtained in the case of predicting the wind speed at time ti using the probability density function $F_j(V)$ which is not yet corrected by the probability density function correction unit 54. In the case illustrated in FIG.8, it is known that the wind speed $V(t_{i+1})$ at time $t_{i+1}$ in the future becomes greater than the present wind speed $V(t_0)$ and thus taking that into account, the probability density function correction unit 54 corrects the probability density function $F_j(V)$. Therefore, in the case illustrated in FIG.8, the wind speed $V(t_1)$ predicted using the corrected probability density function $F_j'(V)$ is greater than the prediction value of the wind speed 60 predicted using the original probability density function $F_j(V)$.

In this manner, the wind speed $V(t_1)$ in the period between time to of the present and time $t_{i+1}$ when the measurement value of the wind speed is next obtained by the forward anemometer 20, can be predicted by the wind speed predicting unit 56.

As described above, in this embodiment, the wind speed $V(t_1)$ in the period from time $t_0$ to time $t_{i+1}$ is predicted by the wind speed predicting unit 56 based on at least the present wind speed $V(t_0)$ obtained by the present wind speed obtaining unit 24 and the future wind speed $V(t_{i+1})$ measured by the forward anemometer 20. Thus, even if the sampling frequency of the forward anemometer 20 is low, the wind speed in the period from time $t_0$ to time $t_{i+1}$ can be obtained using the wind speed predicting unit 56 to predict the wind speed. As a result, it is possible to effectively enjoy benefits of the operation control based on the future wind speed. Further, it is possible to effectively enjoy benefits of the operation control based on the future wind speed while suppressing measuring load of the forward anemometer 20. Furthermore, even in the case of using the forward anemometer 20 having low sampling frequency, it is still possible to effectively enjoy benefits of the operation control based on the future wind speed.

Moreover, according to this embodiment, the probability density function $F_j(V)$ obtained by the probability density function calculation unit 52 with the past wind speed into account, is corrected in accordance with the future wind speed $V(t_{i+1})$ measured by the forward anemometer 20. Therefore, accuracy of prediction of the wind speed $V(t_1)$ at time $t_1$ performed by the wind speed predicting unit 56 can be improved. As a result, it is possible to more effectively enjoy benefits of the operation control based on the future wind speed $V(t_1)$.

Further, the probability density function $F_j(V)$ is corrected in accordance with the future wind speed $V(t_{i+1})$ measured by the forward anemometer 20 and then used for predicting the wind speed and thus, it is possible to reflect rare conditions such as gust on the prediction result of the wind speed and also to predict the future wind speed with accuracy high enough for practical use.

Furthermore, according to this embodiment, similarly to the first embodiment, the following contingent benefits can be enjoyed.

First, the operation control of the wind turbine generator 1 is performed by the operation control unit 58 based on the wind speed predicted by the wind speed predicting unit 56. Thus, the operation control is not affected by change in the net sampling period $T_s$ of measuring the future wind speed (see FIG.8). Secondly, not just the future wind speed $V(t_{i+1})$ measured by the forward anemometer 20 but also the present wind speed $V(t_0)$ obtained by the present wind speed obtaining unit 24 are taken into account to predict the wind speed $V(t_1)$ in the period from time to time $t_{i+1}$. Therefore, the wind speed $V(t_0)$ of the wind that has actually reached the rotor 5 can be reflected in the operation control, thereby improving control performance.

[CONFIGURATION OF OPERATION CONTROL UNIT]

The configuration of the operation controls unit 38, 58 according to the above embodiments is described.

FIG.9 is a block diagram of the operation control unit 38, 58 according to one embodiment. As shown in FIG.9, in some embodiments, the operation control unit 38. 58 includes a feedforward controller 100 and a coefficient update part 110 for updating a control coefficient for the feedforward controller 100.

Herein, shown in FIG.9 is a wind turbine plant 200 equipped with transfer functions 210, 220 related to effect of the wind load on the wind turbine generator 1. The transfer function 210 of the wind turbine plant 200 represents the effect that the wind load has on the wind turbine blade 1 when the wind speed W acts on the blade 2. Meanwhile, the transfer function 220 of the wind turbine plant 200 represents the effect that a command value for controlling the pitch angle of the blade 2 has on the wind turbine generator 1 ($\beta_{TOTAL}$ in the case illustrated in FIG.9).

Although not illustrated in FIG.9, the probability density function correction unit 54 (see FIG.5) may be provided between the forward anemometer 20 and the wind speed predicting unit 56.

The feedforward controller 100 determines the pitch angle command four each blade 2 based on the wind speed $W_{ahead}$ predicted by the wind speed predicting unit 35, 56 so as to reduce effect of the wind load on the wind turbine generator 1 (e.g. vibration of the tower 14 resulting from the wind load). In one embodiment, the feedforward controller 100 determines the pitch angle command $\beta_{FF}$ so as to cancel the output signal from the transfer function 210 by an output signal from the transfer function 220 (i.e. to eliminate the effect of the wind load on the wind turbine generator 1). Further, as the feedforward controller 100, a digital filter such as a FIR filter may be used.

In the exemplary embodiment illustrated in FIG.9, the feedforward controller 100 determines the pitch angle command $\beta_{FF}$ so as to reduce vibration data y (=$y_1$+$y_2$) indicating a level of vibration of the tower 14, which is obtained by the data obtaining unit 70. More specifically, the feedforward controller 100 determines the pitch angle command $\beta_{FF}$ to cancel the output signal $y_1$ from the transfer function 210 by the output signal $y_2$ from the transfer function 220.

In another embodiment, as illustrated in FIG.9, the operation control unit 38, 58 is provided with a feedback controller 120 in addition to the feedforward controller 100. The feedback controller 120 determines a pitch angle command $\beta_{FB}$ for each blade 2 so as to bring the rotation speed $\omega_r$ of the rotor 5 measured by the rotation speed sensor 11A closer to a target rotation speed $\omega_{r\_trg}$ based on difference between the rotation speed $\omega_r$ and the target rotation speed $\omega_{r\_trg}$.

In this case, a sum $\beta_{TOTAL}$ of the pitch angle command $\beta_{FF}$ formed by the output signal from the feedforward controller 100 and the pitch angle command $\beta_{FB}$ formed by the output signal from the feedback controller 120 may be used as the command value for controlling the pitch angle of the blade 2 to control the actuator 3.

The coefficient update part 110 updates a control coefficient for the feedforward controller 100 based on data indicating the effect of the wind load on the wind turbine generator 1.

FIG.10 is a block diagram of the coefficient update part according to one embodiment.

In the exemplary embodiment illustrated in FIG.10, the coefficient update part 110 includes a first transfer function 112 indicating the effect that the pitch angle command $\beta_{FF}$ being the output signal from the feedforward controller 100 has on the vibration data y, a second transfer function 114 having the same characteristics as the feedforward controller 100, and a coefficient determination part 116 for determining a new value of the control coefficient for the feedforward controller 100. Herein, the first transfer function 112 is a model transfer function of the transfer function 220 of the wind turbine plant 200 and is identified in advance or identified online. Further, second transfer function 114 is, for instance, a digital filter (e.g. a FIR filter) having the same filter coefficient as the present control coefficient for the feedforward controller 110.

The coefficient determination part 116 determines a new value of the control coefficient for the feedforward controller 100 so as to reduce a difference $\varepsilon$ between a signal $y_{estimate}$ and the vibration data obtained by the data obtaining unit 70. The signal $y_{estimate}$ is obtained by processing the predicted wind speed $W_{ahead}$ predicted by the wind speed predicting unit 36, 56, using the first transfer function 112 and the second transfer function 114, the first transfer function representing an effect that an output signal from the feedforward controller has on the vibration data, the second transfer function having the same characteristic as the feedforward controller.

In one embodiment, coefficient determination part 116 determines a new value of the control coefficient for the feedforward controller 100 based on the difference c according to convergent algorithm such as RLS algorithm and LMS algorithm.

For instance, in the case where the coefficient determination part 116 determines the control coefficient according to RLS algorithm, the coefficient determination part 116 may determine the control coefficient $\theta(N,)$ for the feedforward controller 100 sequentially so as to minimize the sum of squares of an error signal $\varepsilon$ according to Equations (1) to (3) below.

$$\theta(N) = \theta(N-1) + \frac{P(N-1)x(N)}{\lambda + x^T(N)P(N-1)x(N)} \varepsilon(N) \qquad (1)$$

$$\varepsilon(N) = y(N) - \theta^{\mathsf{T}}(N-1)x(N) \qquad (2)$$

$$P(N) = \frac{1}{\lambda}\left\{ P(N-1) - \frac{P(N-1)x(N)x^{\mathsf{T}}(N)P(N-1)}{\lambda + x^{\mathsf{T}}(N)P(N-1)x(N)} \right\} \qquad (3)$$

However, $\theta(N)$ is the control coefficient for the feedforward controller 100 and $\theta(N-1)$ is the controller coefficient for the feedforward controller 100 in step (N-1). A second member of a right side of Eq. (2) is the output signal $y_{estimate}$ of the second transfer function 114 and is an estimate value of the output signal $y_2$ from the transfer function 220 in the case of using the present control coefficient for the feedforward controller 100. Thus, the error signal $\varepsilon(N)$ represents estimate error of the estimate value $y_{estimate}$ of the output signal $y_2$ from the transfer function 220 with respect to the vibration data $y(N)$ obtained by the data obtaining unit 70. Further, $x(N)$ in step N is an output signal from the first transfer function 112. Furthermore, factor $\lambda$ is a parameter for determining weighting of the past data to step (N-1).

As described above, in some embodiments, the operation control unit 38, 58 includes: the feedforward controller 100 for determining a command value for controlling the pitch angle of the blade 2 based on the wind speed $W_{ahead}$ predicted by the wind speed predicting unit 36, 56 so as to reduce the effect of the wind load; and the coefficient update part 110 for updating the control coefficient for the feedforward controller 100 based on the data showing the effect of the wind load (e.g. the vibration data y) and the predicted wind speed $W_{ahead}$.

As a result, by the feedforward control based on the predicted wind speed $W_{ahead}$ (the future wind speed), it is possible to perform the pitch control of the blade 2 adequately before the wind reaches the wind turbine generator 1, thereby reducing the effect of the wind load. Further, the above pitch control can be achieved by a simple controller structure formed by the feedforward controller 100 and thus, it is possible to suppress increase of calculation load of the controller.

Further, by updating the control coefficient 0 for the feedforward controller 100 based on the data indicating the effect of the wind load on the wind turbine 1 (e.g. the vibration data) and the predicted wind speed $W_{ahead}$, it is possible to use an appropriate value as gain of the feedforward controller 100 in accordance with wind condition change. More specifically, it is possible to improve robustness of a controller for performing the pitch control of the blade 2 against the wind condition changes.

Furthermore, as described above, in one embodiment, the coefficient update part 110 is configured to determine a new value of the control coefficient $\theta$ so as to reduce the difference between the signal $y_{estimate}$ and the vibration data y. The signal $y_{estimate}$ is obtained by processing the predicted wind speed $W_{ahead}$ by the first transfer coefficient 112 indicating the effect of the output signal from the feedforward controller 100 on the vibration data y and the second transfer function 114 having the same characteristics as the feedforward controller 100.

In this case, the control coefficient $\theta$ for the feedfoward controller is updated so as to reduce the error $\varepsilon$ between: the signal obtained by processing the predicted wind speed $W_{ahead}$ using the first transfer function 112 and the second transfer function 114 (the estimate value of the output signal y2 from the transfer function 220 in the case of using the present control coefficient for the feedforward controller 100); and the vibration data y indicating the level of vibration of the tower 14. As a result, by controlling the pitch angle of the blade 2 based on the future wind speed, it is possible to effectively cancel vibration of the tower 14 resulting from the wind load regardless of the wind condition change. Therefore, even when the wind condition changes, excellent damper effect for the tower 14 can be achieved.

Moreover, simply by additionally providing the feedforward controller 100 and the coefficient update part 110 in a control system of a typical wind turbine generator having only a feedback controller for performing feedback control based on a difference between the rotor rotation speed $\omega_r$ and the target rotor rotation speed $\omega_{r\_trg}$, the control illustrated in FIG.9 and FIG.10 can be achieved. Thus, it is not necessary to significantly change the control system of the typical wind turbine generator. Although requiring no major change in the control system, the tower damper effect is significantly improved by the operation of the feedforward controller 100 and the coefficient update part 110, compared to a control system of a typical wind turbine generator equipped with only a feedback controller.

Further, the feedforward controller 100 equipped with the coefficient update part 110 can be achieved, for instance, by an adaptive filter whose transfer coefficient is self-adaptive in accordance with the error signal according to optimization algorithm (convergent algorithm such as RLS algorithm and LMS algorithm). Furthermore, the feedforward controller 100 and the coefficient update part 110 may be assembled in the operation control unit 38, 58 when building the wind turbine generator 1, or may be additionally provided in the operation control unit 38, 58 when modifying the existing wind turbine generator 1.

While the embodiments of the present invention have been described, it is obvious to those skilled in the art that various changes may be made without departing from the scope of the invention.

Particularly, the first embodiment and the second embodiment may be properly combined. For instance, first a plurality of candidates of the interpolation function 40 representing the temporal change from the present wind speed $V(t_0)$ at time to obtained by the present wind speed obtaining unit 24 to the future wind speed $V(t_{i+1})$ at time $t_{i+1}$ measured by the forward anemometer 20, is obtained and the most probable candidate of the interpolation function 40 is selected from the probability density function to be used for the wind speed prediction. The probability density function used in this case may be the corrected probability density function $Fj'(V)$ obtained by correcting the original probability density function $F_j(V)$ in accordance with the wind speed $V(t_{i+1})$ obtained by the measurement result of the forward anemometer 20.

**Claims**

1. An operation method for a wind turbine generator (1) comprising a blade(2), the method comprising:

   obtaining a present wind speed acting on the wind turbine generator (1);
   measuring a future wind speed acting on the blade (2) at a first time point after a prescribed period of time from a present point of time by measuring a wind speed at a measuring position (A) anterior to the wind turbine generator (1);

   the method **characterized by**:

   predicting a wind speed at a second time point in the future between the present point of time and the first time point, based on at least the present wind speed and the future wind speed at the first time point; and
   controlling the wind turbine generator (1) based on the predicted wind speed.

2. The operation method for the wind turbine generator (1) according to claim 1, wherein the step of controlling the wind turbine generator (1) comprises the substeps of:

   determining a command value for controlling pitch angle of the blade (1) by at least a feedforward controller (100) based on the predicted wind speed so as to reduce effect of wind load on the wind turbine generator (1); and
   updating a control coefficient for the feedforward controller (100) based on data indicating the effect of the wind load and the predicted wind speed.

3. The operation method for the wind turbine generator (1) according to claim 2, further comprising the step of:

   obtaining vibration data indicating a level of vibration of a tower (14) of the wind turbine generator (1) caused by the wind load,
   wherein, in the substep of updating the control coefficient, a new value of the control coefficient is determined so as to reduce difference between the vibration data and a signal obtained by processing the predicted wind speed using a first transfer function and a second transfer function, the first transfer function representing an effect that an output signal from the feedforward controller (100) has on the vibration data, the second transfer function having the same characteristic as the feedforward controller (100).

4. The operation method for the wind turbine generator (1) according to any one of claims 1 through 3, further comprising the steps of:

   storing as a past wind speed the present wind speed having been obtained; and
   obtaining an interpolation function based on the past wind speed, the interpolation function representing a temporal change from the present wind speed to the future wind speed at the first time point,
   wherein, in the step of predicting the wind speed, a wind speed at the second time point is predicted using the interpolation function.

5. The operation method for the wind turbine generator (1) according to any one of claims 1 through 3, further comprising the steps of:

   storing as a past wind speed the present wind speed having been obtained;
   obtaining a probability density function based on the past wind speed, the probability density function representing frequency of a wind speed that possibly occurs after the present wind speed; and
   correcting the probability density function in accordance with the future wind speed,

wherein, in the step of predicting the wind speed, a wind speed at the second time point is predicted using the corrected probability density function.

6. The operation method for the wind turbine generator (1) according to any one of claims 1 to 5, wherein, in the step of measuring the future wind speed, a wind speed is measured selectively in a region corresponding to the blade (2) at the measuring position.

7. A wind turbine generator (1) comprising:

   a blade (2);
   a present wind speed obtaining unit (24) for obtaining a present wind speed on the wind turbine generator (1),
   a wind speed measuring unit (20) for measuring a future wind speed acting on the blade at a first time point after a prescribed period of time from a present point of time by measuring a wind speed at a measuring position (A) anterior to the wind turbine generator (1); and **characterized by**
   a wind speed predicting unit (36, 56) for predicting a wind speed at a second time point between the present point of time and the first time point, based on at least the present wind speed and the future wind speed at the first time point; and
   an operation control unit (38, 58) for controlling the wind turbine generator (1) based on the wind speed predicted by the wind speed predicting unit (36, 56).

8. The wind turbine generator (1) according to claim 7, wherein the operation control unit (38, 58) comprises:

   a feedforward controller (100) for determining a command value for controlling pitch angle of the blade (2) based on the predicted wind speed so as to reduce effect of wind load on the wind turbine generator (1); and
   a coefficient update part (110) for updating a control coefficient for the feedforward controller (100) based on data indicating the effect of the wind load and the predicted wind speed.

9. The wind turbine generator (1) according to claim 8, further comprising:

   a data obtaining unit (70) for obtaining vibration data indicating a level of vibration of a tower (14) of the wind turbine generator (1) caused by the wind load,
   wherein the data obtaining unit (70) is configured to determine a new value of the control coefficient so as to reduce difference between the vibration data and a signal obtained by processing the predicted wind speed using a first transfer function and a second transfer function, the first transfer function representing an effect that an output signal from the feedforward controller (100) has on the vibration data, the second transfer function having the same characteristic as the feedforward controller (100).

10. The wind turbine generator (1) according to any one of claims 7 through 9, further comprising:

    a memory unit (34) for storing as a past wind speed the present wind speed having been obtained by the present wind speed obtaining unit (24),
    wherein the wind speed predicting unit (36, 56) is configured to obtain an interpolation function based on the past wind speed stored in the memory unit (34), the interpolation function representing a temporal change from the present wind speed to the future wind speed at the first time point, and to predict a wind speed at the second time point using said interpolation function.

11. The wind turbine generator (1) according to any one of claims 7 through 9, further comprising:

    a memory unit (34) for storing as a past wind speed the present wind speed having been obtained by the present wind speed obtaining unit (24); and
    a probability density function calculation unit (52) for obtaining, based on the past wind speed stored in the memory unit (34), a probability density function representing frequency of a wind speed that possibly occurs after the present wind speed; and
    a probability density function correction unit (54) for correcting the probability density function in accordance with the future wind speed,
    wherein the wind speed predicting unit (36, 56) is configured to predict a wind speed at the second time point using the corrected probability density function.

**12.** The wind turbine generator (1) according to any one of claims 7 through 11, further comprising:

a measuring-unit control unit (32) for controlling the wind speed measuring unit (24) to measure a wind speed is measured selectively in a region corresponding to the blade (2) at the measuring position.

**Patentansprüche**

**1.** Betriebsverfahren für einen Windturbinengenerator (1), der einen Flügel (2) umfasst, wobei das Verfahren umfasst:

Erhalten einer momentanen Windgeschwindigkeit, die auf den Windturbinengenerator (1) einwirkt,
Messen einer zukünftigen Windgeschwindigkeit, die auf den Flügel (2) einwirkt, an einem ersten Zeitpunkt nach einem vorgeschriebenen Zeitraum ab einem momentanen Zeitpunkt durch Messen einer Windgeschwindigkeit an einer Messposition (A) vor dem Windturbinengenerator (1),
wobei das Verfahren **gekennzeichnet ist durch**:

Vorhersagen einer Windgeschwindigkeit an einem zweiten Zeitpunkt in der Zukunft zwischen dem momentanen Zeitpunkt und dem ersten Zeitpunkt auf der Basis mindestens der momentanen Windgeschwindigkeit und der zukünftigen Windgeschwindigkeit an dem ersten Zeitpunkt, und
Steuern des Windturbinengenerators (1) auf der Basis der vorhergesagten Windgeschwindigkeit.

**2.** Betriebsverfahren für den Windturbinengenerator (1) nach Anspruch 1,
wobei der Schritt des Steuerns des Windturbinengenerators (1) die Teilschritte umfasst:

Bestimmen eines Befehlswertes zum Steuern des Anstellwinkels des Flügels (1) durch mindestens eine Feedforward-Steuereinheit (100) auf der Basis der vorhergesagten Windgeschwindigkeit dergestalt, dass die Auswirkung der Windlast auf den Windturbinengenerator (1) verringert wird, und
Aktualisieren eines Steuerungskoeffizienten für die Feedforward-Steuereinheit (100) anhand von Daten, die die Auswirkung der Windlast und die vorhergesagte Windgeschwindigkeit anzeigen.

**3.** Betriebsverfahren für den Windturbinengenerator (1) nach Anspruch 2, das des Weiteren den Schritt umfasst:

Erhalten von Vibrationsdaten, die ein Vibrationsniveau eines Masten (14) des Windturbinengenerators (1) anzeigen, das durch die Windlast verursacht wird,
wobei in dem Teilschritt des Aktualisierens des Steuerungskoeffizienten ein neuer Wert des Steuerungskoeffizienten bestimmt wird, um die Differenz zwischen den Vibrationsdaten und einem Signal, das durch Verarbeitung der vorhergesagten Windgeschwindigkeit mittels einer ersten Transferfunktion und einer zweiten Transferfunktion erhalten wird, zu verringern, wobei die erste Transferfunktion eine Auswirkung repräsentiert, die ein Ausgangssignal von der Feedforward-Steuereinheit (100) auf die Vibrationsdaten hat, wobei die zweite Transferfunktion das gleiche Charakteristikum aufweist wie die Feedforward-Steuereinheit (100).

**4.** Betriebsverfahren für den Windturbinengenerator (1) nach einem der Ansprüche 1 durch 3, das ferner die Schritte umfasst:

Speichern, als eine frühere Windgeschwindigkeit, der erhaltenen momentanen Windgeschwindigkeit, und
Erhalten einer Interpolationsfunktion auf der Basis der früheren Windgeschwindigkeit, wobei die Interpolationsfunktion eine zeitliche Änderung von der momentanen Windgeschwindigkeit zu der zukünftigen Windgeschwindigkeit an dem ersten Zeitpunkt repräsentiert,
wobei in dem Schritt des Vorhersagens der Windgeschwindigkeit eine Windgeschwindigkeit an dem zweiten Zeitpunkt mittels der Interpolationsfunktion vorhergesagt wird.

**5.** Betriebsverfahren für den Windturbinengenerator (1) nach einem der Ansprüche 1 bis 3, das ferner die Schritte umfasst:

Speichern, als eine frühere Windgeschwindigkeit, der erhaltenen momentanen Windgeschwindigkeit,
Erhalten einer Wahrscheinlichkeitsdichtefunktion auf der Basis der früheren Windgeschwindigkeit, wobei die Wahrscheinlichkeitsdichtefunktion die Frequenz einer Windgeschwindigkeit repräsentiert, die möglicherweise nach der momentanen Windgeschwindigkeit eintritt, und

Korrigieren der Wahrscheinlichkeitsdichtefunktion gemäß der zukünftigen Windgeschwindigkeit,
wobei in dem Schritt des Vorhersagens der Windgeschwindigkeit eine Windgeschwindigkeit an dem zweiten Zeitpunkt mittels der korrigierten Wahrscheinlichkeitsdichtefunktion vorhergesagt wird.

6. Betriebsverfahren für den Windturbinengenerator (1) nach einem der Ansprüche 1 bis 5,
wobei in dem Schritt des Messens der zukünftigen Windgeschwindigkeit eine Windgeschwindigkeit gezielt in einer Region gemessen wird, die dem Flügel (2) an der Messposition entspricht.

7. Windturbinengenerator (1), umfassend:

einen Flügel (2),
eine Momentanwindgeschwindigkeits-Erhaltseinheit (24) zum Erhalten einer momentanen Windgeschwindigkeit an dem Windturbinengenerator (1),
eine Windgeschwindigkeitsmesseinheit (20) zum Messen einer zukünftigen Windgeschwindigkeit, die auf den Flügel einwirkt, an einem ersten Zeitpunkt nach einem vorgeschriebenen Zeitraum ab einem momentanen Zeitpunkt durch Messen einer Windgeschwindigkeit an einer Messposition (A) vor dem Windturbinengenerator (1), und **gekennzeichnet durch**
eine Windgeschwindigkeitsvorhersageeinheit (36, 56) zum Vorhersagen einer Windgeschwindigkeit an einem zweiten Zeitpunkt zwischen dem momentanen Zeitpunkt und dem ersten Zeitpunkt auf der Basis mindestens der momentanen Windgeschwindigkeit und der zukünftigen Windgeschwindigkeit an dem ersten Zeitpunkt, und
eine Betriebssteuereinheit (38, 58) zum Steuern des Windturbinengenerators (1) auf der Basis der durch die Windgeschwindigkeitsvorhersageeinheit (36, 56) vorhergesagten Windgeschwindigkeit.

8. Windturbinengenerator (1) nach Anspruch 7,
wobei die Betriebssteuereinheit (38, 58) umfasst:

eine Feedforward-Steuereinheit (100) zum Bestimmen eines Befehlswertes zum Steuern des Anstellwinkels des Flügels (2) auf der Basis der vorhergesagten Windgeschwindigkeit dergestalt, dass die Auswirkung der Windlast auf den Windturbinengenerator (1) verringert wird, und
einen Koeffizientenaktualisierungsteil (110) zum Aktualisieren eines Steuerungskoeffizienten für die Feedforward-Steuereinheit (100) anhand von Daten, die die Auswirkung der Windlast und die vorhergesagte Windgeschwindigkeit anzeigen.

9. Windturbinengenerator (1) nach Anspruch 8, ferner umfassend:

eine Datenerhaltseinheit (70) zum Erhalten von Vibrationsdaten, die ein Vibrationsniveau eines Masten (14) des Windturbinengenerators (1) anzeigen, das durch die Windlast verursacht wird,
wobei die Datenerhaltseinheit (70) dafür konfiguriert ist, einen neuen Wert des Steuerungskoeffizienten zu bestimmen, um die Differenz zwischen den Vibrationsdaten und einem Signal, das durch Verarbeitung der vorhergesagten Windgeschwindigkeit mittels einer ersten Transferfunktion und einer zweiten Transferfunktion erhalten wird, zu verringern, wobei die erste Transferfunktion eine Auswirkung repräsentiert, die ein Ausgangssignal von der Feedforward-Steuereinheit (100) auf die Vibrationsdaten hat, wobei die zweite Transferfunktion das gleiche Charakteristikum aufweist wie die Feedforward-Steuereinheit (100).

10. Windturbinengenerator (1) nach einem der Ansprüche 7 bis 9, ferner umfassend:

eine Speichereinheit (34) zum Speichern, als eine frühere Windgeschwindigkeit, der durch die Momentanwindgeschwindigkeits-Erhaltseinheit (24) erhaltenen momentanen Windgeschwindigkeit,
wobei die Windgeschwindigkeitsvorhersageeinheit (36, 56) dafür konfiguriert ist, eine Interpolationsfunktion auf der Basis der in der Speichereinheit (34) gespeicherten früheren Windgeschwindigkeit zu erhalten, wobei die Interpolationsfunktion eine zeitliche Änderung von der momentanen Windgeschwindigkeit zu der zukünftigen Windgeschwindigkeit an dem ersten Zeitpunkt repräsentiert, und eine Windgeschwindigkeit an dem zweiten Zeitpunkt mittels der Interpolationsfunktion vorherzusagen.

11. Windturbinengenerator (1) nach einem der Ansprüche 7 bis 9, ferner umfassend:

eine Speichereinheit (34) zum Speichern, als eine frühere Windgeschwindigkeit, der durch die Momentanwindgeschwindigkeits-Erhaltseinheit (24) erhaltenen momentanen Windgeschwindigkeit, und

eine Wahrscheinlichkeitsdichtefunktionsberechnungseinheit (52) zum Erhalten, auf der Basis der in der Speichereinheit (34) gespeicherten früheren Windgeschwindigkeit, einer Wahrscheinlichkeitsdichtefunktion, die die Frequenz einer Windgeschwindigkeit repräsentiert, die möglicherweise nach der momentanen Windgeschwindigkeit eintritt, und

eine Wahrscheinlichkeitsdichtefunktionskorrektureinheit (54) zum Korrigieren der Wahrscheinlichkeitsdichtefunktion gemäß der zukünftigen Windgeschwindigkeit,

wobei die Windgeschwindigkeitsvorhersageeinheit (36, 56) dafür konfiguriert ist, eine Windgeschwindigkeit an dem zweiten Zeitpunkt mittels der korrigierten Wahrscheinlichkeitsdichtefunktion vorherzusagen.

**12.** Windturbinengenerator (1) nach einem der Ansprüche 7 bis 11, ferner umfassend:

eine Messeinheit-Steuereinheit (32) zum Steuern der Windgeschwindigkeitsmesseinheit (24), eine Windgeschwindigkeit gezielt in einer Region zu messen, die dem Flügel (2) an der Messposition entspricht.

**Revendications**

**1.** Procédé de fonctionnement d'un générateur d'éolienne (1) comprenant une pale (2), le procédé comprenant :

l'obtention d'une vitesse actuelle du vent agissant sur le générateur d'éolienne (1) ;
la mesure d'une vitesse future du vent agissant sur la pale (2) à un premier instant situé après un délai prescrit partant d'un instant présent, consistant à mesurer une vitesse du vent à une position de mesure (A) antérieure au générateur d'éolienne (1) ;
le procédé étant **caractérisé par** :

la prévision d'une vitesse du vent à un second instant situé dans le futur entre l'instant présent et le premier instant, sur la base au moins de la vitesse actuelle du vent et de la vitesse future du vent au premier instant ; et
la commande du générateur d'éolienne (1) sur la base de la vitesse prévue du vent.

**2.** Procédé de fonctionnement du générateur d'éolienne (1) selon la revendication 1,
dans lequel l'étape de commande du générateur d'éolienne (1) comprend les sous-étapes suivantes :

la détermination d'une valeur de commande pour commander l'angle de calage de la pale (1) par au moins un dispositif de commande prédictive (100) sur la base de la vitesse prévue du vent de manière à réduire l'effet de charge de vent sur le générateur d'éolienne (1) ; et
la mise à jour d'un coefficient de commande pour le dispositif de commande prédictive (100) sur la base de données indiquant l'effet de la charge de vent et la vitesse prévue du vent.

**3.** Procédé de fonctionnement du générateur d'éolienne (1) selon la revendication 2, comprenant en outre l'étape suivante :

l'obtention de données de vibrations indiquant un niveau des vibrations d'un mât (14) du générateur d'éolienne (1) provoquées par la charge de vent,
dans lequel, lors de la sous-étape de mise à jour du coefficient de commande, on détermine une nouvelle valeur du coefficient de commande de manière à réduire une différence entre les données de vibrations et un signal obtenu par traitement de la vitesse prévue du vent au moyen d'une première fonction de transfert et d'une seconde fonction de transfert, la première fonction de transfert représentant un effet qu'exerce un signal de sortie émanant du dispositif de commande prédictive (100) sur les données de vibrations, la seconde fonction de transfert ayant la même caractéristique que le dispositif de commande prédictive (100).

**4.** Procédé de fonctionnement du générateur d'éolienne (1) selon l'une quelconque des revendications 1 à 3, comprenant en outre les étapes suivantes :

le stockage en tant que vitesse passée du vent de la vitesse actuelle du vent ayant été obtenue ; et
l'obtention d'une fonction d'interpolation sur la base de la vitesse passée du vent, la fonction d'interpolation représentant un passage temporel de la vitesse actuelle du vent à la vitesse future du vent au premier instant, dans lequel, lors de l'étape de prévision de la vitesse du vent, on prévoit une vitesse du vent au second instant au moyen de la fonction d'interpolation.

**EP 2 623 776 B1**

5. Procédé de fonctionnement du générateur d'éolienne (1) selon l'une quelconque des revendications 1 à 3, comprenant en outre les étapes suivantes :

le stockage en tant que vitesse passée du vent de la vitesse actuelle du vent ayant été obtenue ;
l'obtention d'une fonction de densité de probabilité sur la base de la vitesse passée du vent, la fonction de densité de probabilité représentant la fréquence d'une vitesse du vent qui survient éventuellement après la vitesse actuelle du vent ; et
la correction de la fonction de densité de probabilité selon la vitesse future du vent,
dans lequel, lors de l'étape de prévision de la vitesse du vent, on prévoit une vitesse du vent au second instant au moyen de la fonction de densité de probabilité corrigée.

6. Procédé de fonctionnement du générateur d'éolienne (1) selon l'une quelconque des revendications 1 à 5,
dans lequel, lors de l'étape de mesure de la vitesse future du vent, on mesure une vitesse du vent de manière sélective dans une région correspondant à la pale (2) à la position de mesure.

7. Générateur d'éolienne (1) comprenant :

une pale (2) ;
une unité d'obtention de la vitesse actuelle du vent (24) permettant d'obtenir une vitesse actuelle du vent sur le générateur d'éolienne (1),
une unité de mesure de la vitesse du vent (20) permettant de mesurer une vitesse future du vent agissant sur la pale à un premier instant situé après un délai prescrit partant d'un instant présent en mesurant une vitesse du vent à une position de mesure (A) antérieure au générateur d'éolienne (1) ; et **caractérisé par**
une unité de prévision de la vitesse du vent (36, 56) permettant de prévoir une vitesse du vent à un second instant situé entre l'instant présent et le premier instant, sur la base au moins de la vitesse actuelle du vent et de la vitesse future du vent au premier instant ; et
une unité de commande de fonctionnement (38, 58) permettant de commander le générateur d'éolienne (1) sur la base de la vitesse du vent prévue par l'unité de prévision de la vitesse du vent (36, 56).

8. Générateur d'éolienne (1) selon la revendication 7,
dans lequel l'unité de commande de fonctionnement (38, 58) comprend :

un dispositif de commande prédictive (100) permettant de déterminer une valeur de commande pour commander l'angle de calage de la pale (2) sur la base de la vitesse prévue du vent de manière à réduire l'effet de charge de vent sur le générateur d'éolienne (1) ; et
une partie mise à jour de coefficient (110) permettant de mettre à jour un coefficient de commande pour le dispositif de commande prédictive (100) sur la base de données indiquant l'effet de la charge de vent et la vitesse prévue du vent.

9. Générateur d'éolienne (1) selon la revendication 8, comprenant en outre :

une unité d'obtention de données (70) permettant d'obtenir des données de vibrations indiquant un niveau des vibrations d'un mât (14) du générateur d'éolienne (1) provoquées par la charge de vent,
dans lequel l'unité d'obtention de données (70) est conçue pour déterminer une nouvelle valeur du coefficient de commande de manière à réduire une différence entre les données de vibrations et un signal obtenu par traitement de la vitesse prévue du vent au moyen d'une première fonction de transfert et d'une seconde fonction de transfert, la première fonction de transfert représentant un effet qu'exerce un signal de sortie émanant du dispositif de commande prédictive (100) sur les données de vibrations, la seconde fonction de transfert ayant la même caractéristique que le dispositif de commande prédictive (100).

10. Générateur d'éolienne (1) selon l'une quelconque des revendications 7 à 9, comprenant en outre :

une unité de mémoire (34) permettant de stocker en tant que vitesse passée du vent la vitesse actuelle du vent ayant été obtenue par l'unité d'obtention de la vitesse actuelle du vent (24),
dans lequel l'unité de prévision de la vitesse du vent (36, 56) est conçue pour obtenir une fonction d'interpolation sur la base de la vitesse passée du vent stockée dans l'unité de mémoire (34), la fonction d'interpolation représentant un passage temporel de la vitesse actuelle du vent à la vitesse future du vent au premier instant, et pour prévoir une vitesse du vent au second instant au moyen de ladite fonction d'interpolation.

20

**11.** Générateur d'éolienne (1) selon l'une quelconque des revendications 7 à 9, comprenant en outre :

une unité de mémoire (34) permettant de stocker en tant que vitesse passée du vent la vitesse actuelle du vent ayant été obtenue par l'unité d'obtention de la vitesse actuelle du vent (24) ; et
une unité de calcul de fonction de densité de probabilité (52) permettant d'obtenir, sur la base de la vitesse passée du vent stockée dans l'unité de mémoire (34), une fonction de densité de probabilité représentant la fréquence d'une vitesse du vent qui survient éventuellement après la vitesse actuelle du vent ; et
une unité de correction de fonction de densité de probabilité (54) permettant de corriger la fonction de densité de probabilité selon la vitesse future du vent,
dans lequel l'unité de prévision de la vitesse du vent (36, 56) est conçue pour prévoir une vitesse du vent au second instant au moyen de la fonction de densité de probabilité corrigée.

**12.** Générateur d'éolienne (1) selon l'une quelconque des revendications 7 à 11, comprenant en outre :

une unité de commande de l'unité de mesure (32) permettant de commander l'unité de mesure de la vitesse du vent (24) pour mesurer une vitesse du vent de manière sélective dans une région correspondant à la pale (2) à la position de mesure.

# FIG. 1

FIG. 2

# FIG. 3

# FIG. 4

▲ PRESENT WIND SPEED

● WIND SPEED MEASURED
BY FORWARD ANEMOMETER

■ PREDICTION VALUE
OF WIND SPEED

— PAST WIND SPEED

FIG. 5

WIND TURBINE CONTROLLER — 50

ROTATION SPEED SENSOR — 11A

AZIMUTH ANGLE DETECTOR — 11B

MEASURING AREA SETTING UNIT — 31

MEASURING-UNIT CONTROL UNIT — 32

FORWARD ANEMOMETER — 20

PRESENT WIND SPEED OBTAINING UNIT — 24

MEMORY UNIT — 34

PROBABILITY DENSITY FUNCTION CALCULATING UNIT — 52

$F_j(V)$

PROBABILITY DENSITY FUNCTION CORRECTION UNIT — 54

$F_j'(V)$

WIND SPEED PREDICTING UNIT — 56

OPERATION CONTROL UNIT — 58

PITCH DRIVE ACTUATOR — 3

POWER CONVERTER — 39

$V_j$

EP 2 623 776 B1

## FIG. 6

## FIG. 7

# FIG. 8

▲ PRESENT WIND SPEED

● WIND SPEED MEASURED
   BY FORWARD ANEMOMETER

■ PREDICTION VALUE
   OF WIND SPEED

— PAST WIND SPEED

NET SAMPLING PERIOD Ts

WIND SPEED
[m/s]

$V(t_1)$

$V(t_{i+1})$

$V(t_0)$

60

$V(t_i)$

$\Delta t$

$t_i$　　$t_0$　　$t_1$　　　　　　$t_{i+1}$
TIME[s]

# FIG. 9

EP 2 623 776 B1

EP 2 623 776 B1

# FIG. 10

VIBRATION DATA y (N)

100

FF
CONTROLLER

WIND
SPEED
W

20

FORWARD
ANEMOMETER

36,56

WIND SPEED
PREDICTING
UNIT

$W_{ahead}(N)$

112

$P_{\beta\_model}$

$x(N)$

114

$F$

$y_{estimate}(N)$

+
−

$\varepsilon(N)$

COEFFICIENT
DETERMINATION
PART

116

COEFFICIENT UPDATE PART

110

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7950901 B
- US 7281891 B
- US 6320272 B
- US 20100237616 A
- GB 2476316 A
- US 20100237617 A